# EUROPÄISCHE PATENTSCHRIFT

(11) **EP 1 582 441 B1**
(45) Veröffentlichungstag und Bekanntmachung des Hinweises auf die Patenterteilung: **07.11.2007**
(21) Anmeldenummer: 05006208.2
(22) Anmeldetag: 22.03.2005
(51) Int. Cl.: B62D 25/20

(54) **Seitenschweller einer Kraftfahrzeugskarosserie**
Side sill of the monocoque body of a motor vehicle
Longeron d'un carrosserie autoportant d'un véhicule automobile

(30) Priorität: 01.04.2004 DE 102004016137
(43) Veröffentlichungstag der Anmeldung: 05.10.2005
(73) Patentinhaber: Bayerische Motoren Werke Aktiengesellschaft, 80809 München (DE)
(72) Erfinder: Schuermann, Marcus, 82223 Eichenau (DE); Riedl, Wilhelm, 85276 Pfaffenhofen (DE)

(56) Entgegenhaltungen:
- DE-A1- 19 528 309
- GB-A- 2 324 069
- PATENT ABSTRACTS OF JAPAN Bd. 007, Nr. 265 (M-258), 25. November 1983 (1983-11-25) & JP 58 145576 A (SUZUKI JIDOSHA KOGYO KK), 30. August 1983 (1983-08-30)

## Beschreibung

Die Erfindung betrifft ein Kraftfahrzeug gemäß dem Oberbegriff des Anspruchs 1.

Es ist bereits beispielsweise aus der DE 197 08 215 bekannt, einen Schweller mit einer Verstärkungseinlage vorzusehen, wobei die Verstärkungseinlage insbesondere bei einem Seitencrash zur Verhinderung der Eindrückung der Fahrgastzelle im Bereich des Schwellers dient.

DE 195 28 309 beschreibt eine selbsttragende Kraftfahrzeug Karrosserie mit einer im Bereich eines Türschwellers vorgesehene Wagenheberkonsole.

Aufgabe der Erfindung ist es, ein Kraftfahrzeug zu schaffen, bei dem der Schweller eine zusätzliche Versteifung aufweist.

Diese Aufgabe wird durch die Merkmale des Anspruchs 1 gelöst.

Bei dem erfindungsgemäßen Kraftfahrzeug ist an einer Unterseite des Schwellers in einem Bereich vor einem Hinterrad, bei dem es beim Abfahren von beispielsweise einer Bordsteinkante zu einem Aufsetzen des Schwellers auf den Bordstein kommt, eine Verstärkung vorgesehen, durch die eine bodenseitige Außenwand des Schwellers und eine dazu gegenüberliegende Bodenwand eines Seitenrahmens vor einer Beschädigung geschützt ist. Dazu ist in einem Hohlraum zwischen der Bodenwand des Seitenrahmens und der dazu gegenüberliegenden Außenwand des Schwellers ein Verstärkungselement angeordnet, so dass der Hohlraum ausgefüllt ist und bei einer Krafteinleitung von außen die Kraft großflächig über das Verstärkungselement auf den Seitenrahmen übertragen wird.

In einer vorteilhaften Ausführungsform ist das erfindungsgemäße Verstärkungselement ein Kunststoffbauteil, das in Krafteinleitungsrichtung Verstärkungswände aufweist, an die sich Vertiefungen anschließen. In einer Ansicht von oben ergibt sich dadurch beispielsweise eine Wabenstruktur.

Ein als Kunststoffbauteil ausgebildetes, erfindungsgemäßes Verstärkungselement ist auch mit einer komplizierten Außenform einfach herstellbar. Darüber hinaus baut ein in einer Wabenstruktur hergestelltes Kunststoffbauteil im Vergleich zu einem massiven Bauteil leichter, so dass sich eine Gewichtsersparnis ergibt.

Vorteilhafterweise wird in einer Ausführungsform als Kunststoff ein Thermoplast, wie beispielsweise PPEPDM verwendet.

Die Struktur des erfindungsgemäßen Verstärkungselementes ist so ausgelegt, dass durch das Verstärkungselement in der Krafteinleitungsrichtung eine Kraft aufgenommen werden kann, die dem maximal zulässigen Fahrzeuggewicht entspricht, das heißt dem Fahrzeuggewicht bei maximaler Zuladung. Die Kraftaufnahme erfolgt dabei im Wesentlichen im elastischen Bereich, so dass eine Zerstörung des Verstärkungselementes vermieden ist.

In einer Ausführungsform eines Seitenrahmens kann an einer dem Schweller gegenüberliegenden Bodenwand des Seitenrahmens ein sich nach unten in Richtung des Schwellers oder einer sich an den Schweller anschließenden Bodengruppe oder Bodenverkleidung erstreckender Flansch ausgebildet sein. Auch in einem solchen Fall wird durch das erfindungsgemäße Verstärkungselement in einfacher Weise erreicht, dass der nach unten zeigende Flansch des Seitenrahmens bei einer Krafteinleitung vom Fahrzeugboden her nicht beschädigt wird.

In einer vorteilhaften Ausführungsform ist das Verstärkungselement mit einem Bauteil der Bodengruppe einstückig verbunden.

In einer vorteilhaften Ausführungsform wird die Länge des erfindungsgemäßen Verstärkungselementes durch eine Aufnahme für einen Wagenheber begrenzt, die an der Bodenwand des Seitenrahmens ausgebildet ist.

Eine Ausführungsform der Erfindung wird nachstehend anhand der Zeichnungen beispielshalber beschrieben. Dabei zeigen:
- Fig. 1: eine Explosionsdarstellung, die einen Seitenrahmen, einen Schweller, ein Verstärkungselement und eine Staulippe vor dem Zusammenbau zeigt,
- Fig. 2: eine perspektivische Darstellung eines teilweise dargestellten Schwellers, an dessen einem Ende, das einem hinteren Radhaus zugewandt ist, ein Verstärkungselement mit einem Bodenbauteil angeordnet ist,
- Fig. 3: eine Ansicht eines in Fahrzeugquerrichtung y verlaufenden Schnittes, aus der die Anordnung des Verstärkungselementes in einem Hohlraum zwischen einer Bodenwand des Seitenrahmens und einer Bodenwand des Schwellers hervorgeht,
- Fig. 4: eine in Fahrzeugquerrichtung y verlaufende Schnittansicht ähnlich der Fig. 3, in der die Versteifungswände des Verstärkungselementes sichtbar sind und
- Fig. 5: eine Ansicht eines Schnittes, der in Fahrzeuglängsrichtung x verläuft, in der die Anordnung des Verstärkungselementes vor einem hinteren Radhaus dargestellt ist.

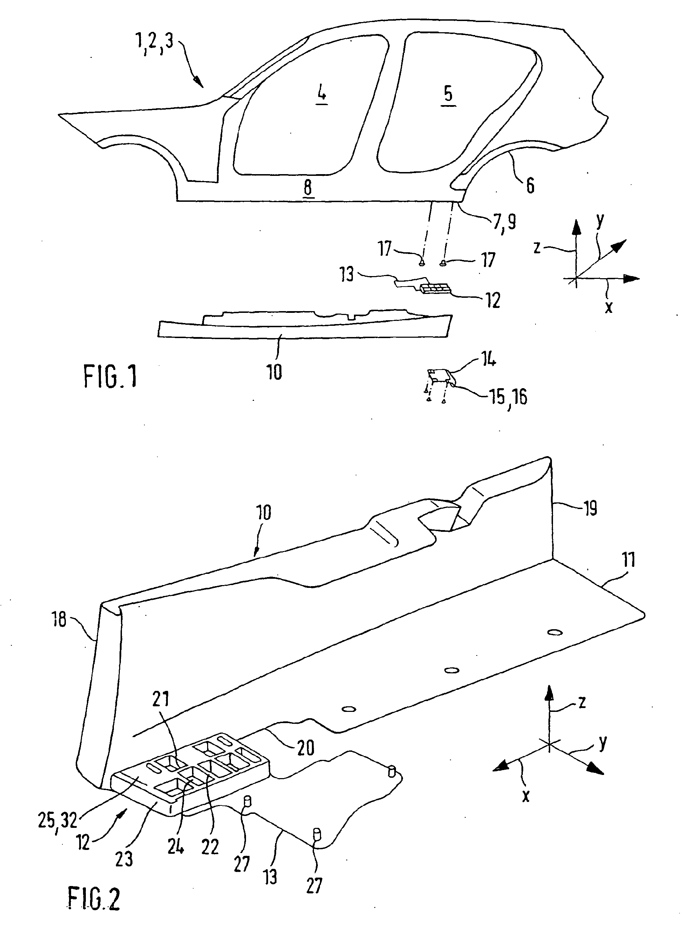

Die Fig. 1 zeigt einen Seitenrahmen 3 einer selbsttragenden Karosserie 2 eines Kraftfahrzeuges 1. Der Seitenrahmen 3 ist mit Türausschnitten 4 und 5 für nicht dargestellte Türen versehen. Im Anschluss an den hinteren Türausschnitt 5 ist an dem Seitenrahmen 3 ein hinteres Radhaus 6 ausgebildet. Ein Schweller 10 wird zum einen beabstandet zu einem Bodenabschnitt 7 des Seitenrahmens 3 und zum anderen an einem unteren Ende 9 eines in Fahrzeuglängsrichtung x verlaufenden, äußeren Seitenabschnittes 8 des Seitenrahmens 3 befestigt.

Zwischen einer in der Fig. 2 dargestellten Bodenwand 11 des Schwellers 10 und dem Bodenabschnitt 7 des Seitenrahmens 3 ist ein Verstärkungselement 12 befestigt, das in der gezeigten Ausführungsform einstückig mit einem Bodenbauteil 13 einer nicht dargestellten Bodenverkleidung oder Bodengruppe der Karosserie 2 verbunden ist.

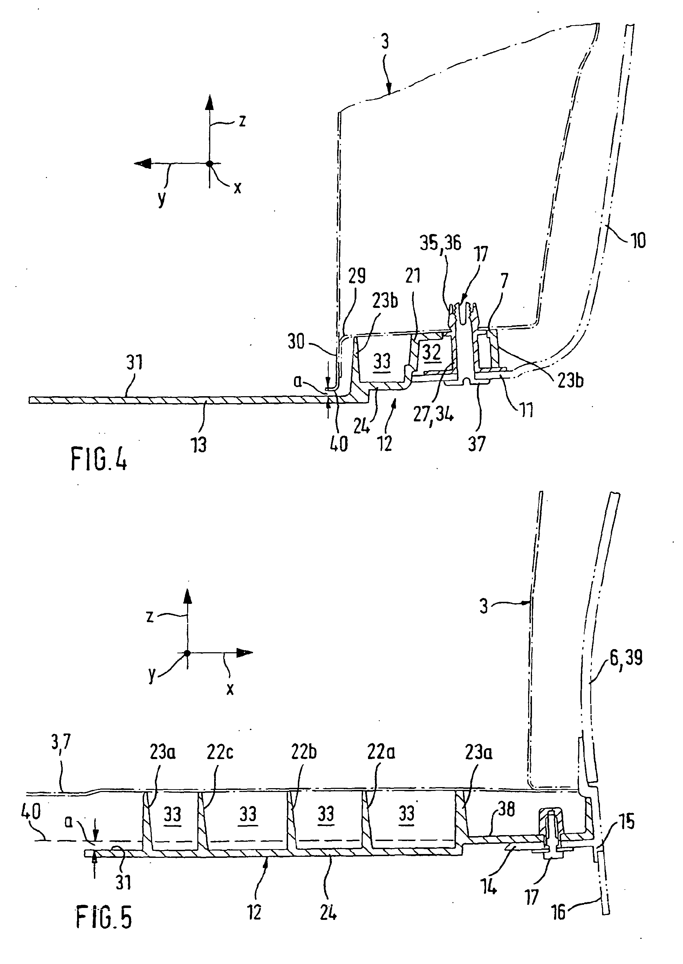

An dem Bodenbauteil 13 ist in der in den Fig. 1 und 5 gezeigten Ausführungsform ein weiteres Bodenbauteil 14 angeordnet, das an seinem dem hinteren Radhaus 6 zugewandten Ende 15 eine Staulippe 16 aufweist. Die Befestigung des Verstärkungselementes 12 mit dem Schweller 10, des Bodenbauteils 13 mit dem Bodenbauteil 14 und des Bodenbauteils 14 mit der Staulippe 16 erfolgt beispielsweise über Clip- und/oder Schraubverbindungen 17.

Die Fig. 2 zeigt ein dem hinteren Radhaus 6 zugewandtes, hinteres Ende 18 des Schwellers 10. Der Schweller 10 ist als ein offenes Profil mit einer Seitenwand 19 und der Bodenwand 11 ausgebildet. Ferner weist die Bodenwand 11 im Anschluss an das an der Bodenwand 11 befestigte Verstärkungselement 12 eine Öffnung oder einen Ausschnitt 20 auf, durch den eine Aufnahme für einen Wagenheber im zusammengebauten Zustand der Karosserie 2 hindurchgeführt ist.

Das Verstärkungselement 12 ist im wesentlichen quaderförmig mit einem im Prinzip rechteckförmigen Querschnitt und einem rechteckförmigen Längsschnitt ausgebildet. Zur Gewichtseinsparung ist das Verstärkungselement 12 nicht massiv ausgebildet, sondern weist belastungsoptimiert eine in Fahrzeuglängsrichtung x verlaufende Versteifungswand 21 sowie senkrecht dazu verlaufende, sich in Fahrzeugquerrichtung erstreckende Querversteifungswände 22a bis 22c auf, wie dies insbesondere aus der Fig. 5 hervorgeht.

Das Verstärkungselement 12 ist mit einem umlaufenden Seitenrand 23 versehen, mit dem einstückig die Längsversteifungswand 21 sowie die Querversteifungswände 22a bis 22c verbunden sind. Ferner ist das Verstärkungselement 12 mit einem Boden 24 versehen. Benachbarte Versteifungswände 21, 22, 23 können zur Erhöhung der Steifigkeit oder zur Ausbildung von Befestigungsaufnahmen über einen entsprechenden oberen Abschnitt 25 unter Bildung eines geschlossenen Hohlraumes 32 verschlossen sein. Zwischen den Versteifungswänden 21, 22 und 23 können nach oben hin offene Vertiefungen 33 vorgesehen sein. Das mit dem Verstärkungselement 12 einstückig verbundene Bodenbauteil 13 ist in der gezeigten Ausführungsform als eine ebene Platte ausgebildet, an der als Mutter oder Dübel dienende Befestigungseinrichtungen 27 vorgesehen sind.

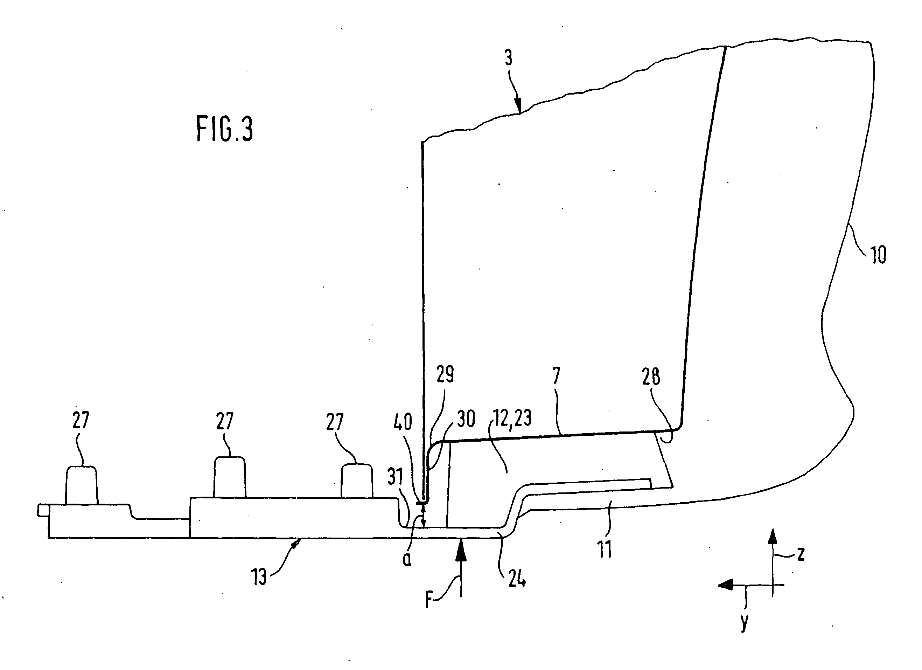

Aus der Querschnittansicht der Fig. 3 ist erkennbar, dass das Verstärkungselement 12 einen Hohlraum 28 zwischen dem Bodenabschnitt 7 des Seitenrahmens 3 und der Bodenwand 11 des Schwellers 10 in vertikaler Fahrzeugrichtung z ohne Spiel vollständig ausfüllt. In der Fig. 3 ist das Verstärkungselement 12 nicht geschnitten, vielmehr ist der in Fahrzeugquerrichtung y verlaufende Außenrand 23 des Verstärkungselementes 12 erkennbar.

An einem zur Fahrzeugmitte zugewandten Ende 29 des Bodenabschnittes 7 des Seitenrahmens 3 ist ein sich nach unten erstreckender Flansch 30 ausgebildet, der um einen Abstand a von einer Oberseite 31 des Bodens 24 des Verstärkungselementes 12 beabstandet ist. Der Abstand a kennzeichnet die Strecke, um den sich das Verstärkungselement 12 maximal in vertikaler Richtung z elastisch verformt. Über den Boden 24 ist das Verstärkungselement 12 einstückig mit dem Bodenbauteil 13 verbunden.

Die Fig. 4 zeigt einen Querschnitt, der in Fahrzeugquerrichtung y wie bei der Fig. 3 verläuft. In der Fig. 4 ist ein nach oben hin offener Hohlraum 33 erkennbar. Der offene Hohlraum 33 weist einen sich von einem Boden 24 nach oben hin konisch sich erweiternden Querschnitt auf.

Ferner ist in der Fig. 4 ein nach oben hin geschlossener Hohlraum 32 dargestellt, in dem eine als Hülse 34 ausgebildete Befestigungsvorrichtung 27 angeordnet ist, die an ihrem oberen Ende 35 als ein spreizbarer Dübel 36 geformt ist. In der Hülse 34 ist eine Schraube 37 angeordnet.

Die Fig. 5 zeigt ein hinteres Ende 38 des Verstärkungselementes 12, an dem das Bodenbauteil 14 über eine Schraubverbindung 17 oder dergleichen befestigt ist. Das Bodenbauteil 14 weist die Staulippe 16 auf, die eine Verlängerung einer in Fahrzeugquerrichtung y verlaufenden Seitenwand 39 des hinteren Radhauses 6 ist und die unter anderem zur Umlenkung der Fahrtwindströmung dient.

In der Fig. 5 sind die in Fahrzeugquerrichtung y verlaufenden Außenwände 23a sowie die inneren Versteifungsquerwände 22a bis 22c dargestellt. Die durch die Versteifungsquerwände 22a bis 22c und die Außenränder 23 nach oben hin offenen Hohlräume 33 weisen jeweils einen konischen Querschnitt auf, um das Ausformen bei der Herstellung des Verstärkungselementes 12 zu vereinfachen. In einer strichlierten Linie ist ein unterer Außenrand 40 des Flansches 30 dargestellt, der um einen Abstand a von der Oberseite 31 des Boden 24 beabstandet ist.

Das gezeigte weist im Prinzip eine gewichts- und belastungsoptimierte Wabenstruktur auf. Die Form, Größe, Steifigkeit des Verstärkungselementes 12 und die Auswahl eines geeigneten Werkstoffes hängt von den gegebenen räumlichen Bedingungen, der Form und Steifigkeit des Seitenrahmens 3, insbesondere dessen Bodenabschnitts 7 und eines gegebenenfalls vorhandenen Flansches 30, ferner von der Form und Steifigkeit des Schwellers 10 und dessen Bodenwand 11 sowie der von außen über die Bodenwand 11 einleitbaren Kraft F ab. Die Kraft F wird von mehreren Parametern wie dem Fahrzeuggewicht, der maximalen Zuladung des Fahrzeuges sowie dem Abstand des Schwellers 10 zur Fahrbahn beeinflußt.

In der gezeigten Ausführungsform besteht das Verstärkungselement 12 aus einem elastisch verformbaren Kunststoff. Als geeignet hat sich ein Thermoplast aus PPEPDM erwiesen. In anderen Ausführungsformen können auch Werkstoffkombinationen aus Kunststoff und Metall verwendet werden.

## Patentansprüche

1. Kraftfahrzeug (1) mit einer selbsttragenden Karosserie (2), die zwei gegenüberliegende Seitenrahmen (3,7) aufweist, an deren unteren Enden jeweils ein Seitenschweller (10,11) angeordnet ist, mit einer Bodengruppe, die zumindest die beiden Seitenrahmen miteinander verbindet, mit jeweils einem hinteren Radhaus (6), das sich an ein hinteres Ende des jeweiligen Seitenschwellers anschließt, mit gegebenenfalls einer Aufnahme für einen Wagenheber und mit jeweils einem Hohlraum zwischen einem Bodenabschnitt des Seitenrahmens und einer dazu gegenüberliegenden Bodenwand des Schwellers,
**dadurch gekennzeichnet, dass** der Hohlraum (28) zwischen dem Seitenrahmen (3, 7) und dem Schweller (10, 11) über eine Mindestlänge in Fahrzeuglängsrichtung (x) und eine Mindestbreite in Fahrzeugquerrichtung (y) mit einem entsprechend steifen Verstärkungselement (12) so ausgefüllt ist, dass bei einem Aufsetzen des hinteren Endes (18) der Bodenwand (11) des Schwellers (10) beim Überfahren einer Fahrbahnunebenheit zumindest eine Beschädigung eines Bodenabschnittes (7, 30) des Seitenrahmens (3) durch eine großflächige Aufnahme der dabei entstehenden Kraft (F) vermieden ist.

2. Kraftfahrzeug nach Anspruch 1,
**dadurch gekennzeichnet, dass** das Verstärkungselement (12) zwischen einer vorderen, in Fahrzeugquerrichtung y verlaufenden Seitenwand (39) des hinteren Radhauses (6) und einer Aufnahme (20) für einen Wagenheber oder dgl. vorgesehen ist.

3. Kraftfahrzeug nach den Ansprüchen 1 oder 2,
**dadurch gekennzeichnet, dass** das Verstärkungselement (12) ein Bauteil aus einem Kunststoff oder aus einer Kombination von Werkstoffen wie Kunststoff und Metall ist.

4. Kraftfahrzeug nach einem der vorhergehenden Ansprüche,
**dadurch gekennzeichnet, dass** das Verstärkungselement (12) als Werkstoff einen Kunststoff aus PPEPDM aufweist.

5. Kraftfahrzeug nach einem der vorhergehenden Ansprüche,
**dadurch gekennzeichnet, dass** das Verstärkungselement (12) gewichts- und belastungsoptimiert ausgelegt ist.

6. Kraftfahrzeug nach einem der vorhergehenden Ansprüche,
**dadurch gekennzeichnet, dass** das Verstärkungselement (12) eine Wabenstruktur mit geschlossenen und/oder offenen Hohlräumen (32, 33) aufweist.

7. Kraftfahrzeug nach einem der vorhergehenden Ansprüche,
**dadurch gekennzeichnet, dass** die Wabenstruktur des Verstärkungselementes (12) durch einen umlaufenden Außenrand (23) und durch Versteifungslängswände (21) und Versteifungsquerwände (22) gebildet ist.

8. Kraftfahrzeug nach einem der vorhergehenden Ansprüche,
**dadurch gekennzeichnet, dass** an das Verstärkungselement (12) ein Bodenbauteil (13) einstückig vorgesehen ist, das Bestandteil einer Bodenverkleidung der Karosserie (2) des Kraftfahrzeuges (1) ist.

## Claims

1. A vehicle (1) with a self-supporting body (2) comprising two facing side frames (3, 7) with a side sillboard (10, 11) disposed at the bottom end of each, also comprising a base group which at least connects the two side frames to one another, a rear wheel housing (6) adjoining a rear end of each respective side sillboard, a recess if required for a jack and respective cavities between a base portion of the side frame and a opposite base wall of the sillboard,
**characterised in that** the cavity (28), between the side frames (3, 7) and the sillboards (10, 11), is filled with a suitably stiff reinforcing element (12) over a minimum length in the longitudinal direction (x) of the vehicle and a minimum width in the transverse direction (y) thereof such that if the rear end (18) of the base wall (11) of the sillboard (10) touches the ground when travelling over a bumpy road, damage is at least avoided to a base portion (7, 30) of the side frame (3), since the resulting force (F) is received over a large area.

2. A vehicle according to claim 1,
**characterised in that** the reinforcing element (12) is disposed between a front side wall (39) of the rear wheel housing (6) extending in the transverse direction (y) and a receiver (20) for a jack or the like.

3. A vehicle according to claim 1 or claim 2,
**characterised in that** the reinforcing element (12) is a component made of a plastics material or a combination of materials such as plastics material and metal.

4. A vehicle according to any of the preceding claims,
**characterised in that** the reinforcing element (12) is made of a PPEPDM plastics material.

5. A vehicle according to any of the preceding claims,
**characterised in that** the reinforcing element (12) is optimised with regard to weight and load-bearing capacity.

6. A vehicle according to any of the preceding claims,
**characterised in that** the reinforcing element (12) has a honeycomb structure with closed and/or open cavities (32, 33).

7. A vehicle according to any of the preceding claims,
**characterised in that** the honeycomb structure of the reinforcing element (12) is formed by a peripheral outer edge (23) and by longitudinal stiffening walls (21) and transverse stiffening walls (22).

8. A vehicle according to any of the preceding claims,
**characterised in that** a base part (13) is integrally formed on the reinforcing element (12) and is a component of a floor covering of the body (2) of the vehicle (1).

## Revendications

1. Véhicule automobile 1 à carrosserie autoportante 2 ayant deux cadres latéraux 3, 7 opposés, et dont les extrémités inférieures comportent chaque fois un seuil de porte 10, 11, un groupe de plancher reliant l'un à l'autre au moins les deux cadres latéraux, un passage de roue arrière 6 faisant chaque fois suite à l'extrémité arrière du seuil de porte respectif, le cas échéant un logement pour un cric et chaque fois une cavité entre un segment de plancher du cadre latéral et une paroi de fond du seuil, en regard,
**caractérisé en ce que**
la cavité 28 est occupée, entre le cadre latéral 3, 7 et le seuil de porte 10, 11, sur une longueur minimale dans la direction longitudinale x du véhicule et pour une largeur minimale dans la direction transversale y du véhicule, avec un élément de renforcement rigide correspondant 12, et
lorsqu'on rapporte l'extrémité arrière 18 de la paroi de plancher 11 du seuil 10 en cas de passage sur une irrégularité de la chaussée, on évite au moins d'endommager le segment de plancher 7, 30 du cadre latéral 3 en recevant la force F ainsi engendrée sur une grande surface.

2. Véhicule automobile selon la revendication 1,
**caractérisé en ce que**
l'élément de renforcement 12 est prévu entre une paroi latérale 39, avant du passage de roue 6, arrière, paroi dirigée dans la direction transversale y du véhicule et un logement 20 pour un cric ou moyen analogue.

3. Véhicule automobile selon l'une des revendications 1 ou 2,
**caractérisé en ce que**
l'élément de renforcement 12 est une pièce en matière plastique ou une combinaison de matière telle que de la matière plastique et du métal.

4. Véhicule automobile selon l'une des revendications précédentes,
**caractérisé en ce que**
l'élément de renforcement 12 comporte une matière plastique de PPEPDM.

5. Véhicule automobile selon l'une des revendications précédentes,
**caractérisé en ce que**
l'élément de renforcement 12 est optimisé en poids et en résistance.

6. Véhicule automobile selon l'une des revendications précédentes,
**caractérisé en ce que**
l'élément de renforcement 12 a une structure en nids d'abeilles avec des cavités 32, 33 fermées et/ou ouvertes.

7. Véhicule automobile selon l'une des revendications précédentes,
**caractérisé en ce que**
la structure en nids d'abeilles de l'élément de renforcement 12 est formée par un bord extérieur 23 périphérique et par des parois longitudinales de renforcement 21 et des parois transversales de renforcement 22.

8. Véhicule automobile selon l'une des revendications précédentes,
**caractérisé en ce que**
l'élément de renforcement 12 comporte une partie de plancher 13 en une seule pièce qui appartient à l'habillage de plancher de la carrosserie 2 du véhicule automobile 1.
